# EUROPEAN PATENT APPLICATION

(11) **EP 3 222 605 A1**
(43) Date of publication of application: **27.09.2017**
(21) Application number: 15846432.1
(22) Date of filing: 01.10.2015
(51) Int. Cl.: C06C 5/04, C06B 33/12, C06B 45/02, B82Y 30/00

(54) **THERMAL SPARK-CONDUCTING TUBE USING NANOSCALE PARTICLES**

(30) Priority: 03.10.2014 BR 102014024720
(71) Applicant: Pari SA, 6301 Zug (CH); Falquete, Marco Antonio, 80420190 Curitiba (BR)
(72) Inventor: FALQUETE, Marco Antonio, 80420190 Curitiba (BR)
(74) Representative: Herzog, Fiesser & Partner Patentanwälte PartG mbB
(86) International application number: PCT/BR2015/050164
(87) International publication number: WO 2016/049724

(57) **Abstract**

**"THERMAL SPARK CONDUCTOR TUBE USING NANOMETRIC PARTICLES",** refers to the Invention Patent for a thermal spark conductor tube, applied as a signal transmitter for connection and initiation of explosive columns, which employs a low toxicity nanometric pyrotechnic mixture, with superior thermal performance of the spark which maintains the advantages of the current pyrotechnic shock tube and has additional advantages of reducing or even eliminating the use of contaminants from underground water, presenting a lower risk of conducting an electrostatic discharge of the human body to its end, and to use pyrotechnic mixture production process quite simple and with less risk of accidents due to friction and mechanical shocks.

## Description

The present Invention Patent refers to a thermal spark conductor tube, applied as a signal transmitter for connection and initiation of explosive columns, usually complemented by a delay fuze or used as a delay unit, which employs a low toxicity nanometric pyrotechnic mixture with the superior thermal performance of the spark, which maintains the advantages of the current pyrotechnic shock tube in relation to the shock wave conduction tube, that is, product with greater sensitivity and sensibility of transmission, maintenance of propagation even with cuts or holes in the tube, and low risk classification in the tube transport and process with the possibility of continuous and separate dosing of the non-activated components, simultaneously with the formation of the plastic tube and presents additional advantages of reduction or even elimination of the use of contaminants from underground water, present a lower risk of ignition by electrostatic discharge of the human body, and to use the production process of the pyrotechnic mixture quite simple and with a lower risk of accidents due to friction and mechanical shocks.

Since the early 1980s, signal transmitting tubes, commercially known as "non-electric detonators" or "shock tubes", have been widely applied for connection and initiation of explosives in the building area, and marketed with such brands as NONEL, EXEL, BRINEL, etc. Such devices are applied to replace the electric fuzes connected through metallic wires in most applications, representing a revolution in the area of detonation accessories, either by their ease of connection and application, or by the intrinsic safety against accidental ignitions by induction of spurious electric current.

Currently there are the following main processes for the production of these devices and resulting products:
1) U.S. Patent No. 3,590,739 is the original reference of the conventional shock tube. Describes a plastic extrusion process forming an outer diameter circular tube ranging from 2.0 to 6.0 mm and internal diameter ranging from 1.0 to 5.0 mm, where secondary explosive powder is introduced continuously and simultaneously such as HMX, RDX or PETN, previously mixed with Aluminum Powder, at its inner periphery, at the same time as the tube is formed, resulting in a product called a non-electric shock tube, commercially available under such trade names as NONEL and EXEL, which, when initiated by a primary explosive blasting cap, generates a gaseous shock and impact wave with speeds of 1,800 to 2,200 m/s;
2) Brazilian patent BR 8104552, is the original reference of the pyrotechnic shock tube. It describes a plastic extrusion process forming an outer diameter circular tube ranging from 2.0 to 6.0 mm and internal diameter ranging from 1.0 to 5.0 mm, where is continuously and concomitantly introduced K₂Cr₂O₇ + Al or Mg , or Fe₂O₃ + Al or Mg, or Sb₂O₃+ Al or Mg, Sb₂O₅ + Al or Mg or O₂ + Al or Mg pyrotechnic mixture powder, at its internal periphery, at the same time that the tube is formed, obtaining a product called pyrotechnic non-electric shock tube, which when initiated by a primary explosive fuze, reacts by aluminothermy without generation of gases, and generates a plasma of energy conduction;
3) U.S. Patent No. 4,757,764 describes a non-electric system for disassemble initiation signal control using plastic tube with delay pyrotechnic blends adhered in its interior, in particular using low speed deflagration, i.e. at speeds much smaller than those of conventional shock tubes and detonating cord, in order to use predetermined tube lengths to obtain a fast delay time, in the order of milliseconds, instead of the conventional delay element. In order to present this concept, the fuzes used are necessarily instantaneous, without delay element, and there was no concern of the inventor in optimizing the thermal performance of the spark, in ensuring the passage through constraints in the tube, or in decreasing the Sensitivity to friction and shock of the blend. It is clear from the patent specification report, and from all examples, that its use as a delay element is limited to the tens of milliseconds range and is not suitable for most of the delays practically used.

Signal transmission tubes are usually complemented by the insertion of a delay fuze at its end, consisting of a metal capsule containing a layer of secondary explosive pressed in its interior, followed by a layer of primary explosive, and a delay element comprised of a metal cylinder containing therein a compacted powder delay pyrotechnic mixture column and often an additional column of initiating pyrotechnic mixture that is sensitive to the heat generated by the percussion and impact wave.

The wave and percussion conduction tube manufacturing process has the following disadvantages:
a) The manufacture of explosive-loaded tube (RDX or PETN are toxic and dangerous) offers risks of both accidental explosions and handling of toxic products, requiring special care and special protections in the manufacturing line. The fact of using molecular explosive prevents the dosing of non-activated components during tube extrusion;
b) In the conventional shock wave conduction tube, the reaction products generated are basically hot gases, which, upon exiting the opposite end of the tube, undergo expansion with heat loss, which hinders the initiation of delayed pyrotechnic mixtures, it being necessary either to add a sensitive pyrotechnic mixture column to give continuity to the explosive train or to use pyrotechnic mixtures which are more sensitive to heat and with a longer length. As a consequence, there is a product with higher cost of manufacturing and use, besides offering greater risks in the manufacturing;
c) The adherence of crystalline explosives, RDX or PETN in plastic tubes is low, requiring the use of special processes of manufacture and use of special plastic resins, usually ionomeric polymers such as Surlyn, to minimize the presence of unbound powder and avoid unloaded portions of the tube;
d) The conventional shock wave conduction tube has a low Sensitivity of energy transmission through a space between two portions of the air gap aligned tube, generally smaller than 1 cm, so that any cuts or holes in the tube cause use failures due to loss of shock wave pressure;
e) The conventional shock wave conduction tube exhibits sensibility to the so-called "*snap, slap, and shoot*" effect by the industry, and accidental ignition may occur when the tube is pulled and ruptured, as recognized in the paper presented in 28th. ISEE Annual Conference, Las Vegas, 2002, and in all catalogs and manuals for use of conventional shock tubes.
f) Conventional shock tube is classified as an explosive for transport in many countries, resulting in additional costs and difficulties for transport, especially after increasing the strictness of inspection of dangerous products due to the fight against terrorism;
g) The conventional shock tube exhibits failures after exposure to water at pressures above 2 bar, which often occurs in the application of explosives, due to the hydrophilic characteristics of the Surlyn type ionomeric resins;
h) Tubes made of Surlyn type resins have low bursting tensions and high permeability of hydrocarbons present in hot explosive emulsions, which forces the co-extrusion of an additional outer layer of polyethylene;
i) The ionomeric resins represent a high cost compared to more common resins, such as polyethylene;
j) The tube deflagration speeds ranging from 1800 to 2200 m/s, according to the manufacturer's specifications, I,e. +/- 10% around the average speed, which interferes with the accuracy of the delay element. For example, both U.S. patents 5,173,569, 5,435,248, 5,942,718, and Brazilian BR 9502995, use a shock tube as an electronic delay fuze initiator. These fuzes are characterized by a high precision electronic delay element, however the delay time error of a given length of tube is incorporated to the error intrinsic to the electronic circuit. At a typical length of 21 m, used in open pit detonations, the error would be +/-1 ms, while the intrinsic accuracy of the electronic circuits is typically +/-0.1 ms; and
k) The conventional shock tube, by generating basically gaseous reaction products producing a percussion and impact wave, disperses much of the thermal energy generated in the expansion of these gases as it leaves the tip of the tube, so that it can only initiate delay elements that are very heat sensitive, requiring additional sensitive ignition elements on the slow delay elements, increasing the risks and costs of the industrial process;

The pyrotechnic shock tube has the following disadvantages:
A) Pyrotechnic mixtures use K₂Cr₂O₇, Sb₂O₃ and Sb₂O₅ toxic products and flammable solvents, requiring solvent recycling, handling care and proper disposal of wastes;
B) The extrusion process of the plastic tube involves the dosage of the previously prepared sensitive pyrotechnic mixture, during the formation of the plastic tube, with risks of accidental initiation and propagation to the rest of the mixture;
C) The pyrotechnic shock tube does not withstand the chemical attack of the hydrocarbons used in the hot explosive emulsion formulations, which are the most frequently encountered environment in the civil explosive applications currently, occurring faults in the continuity of the spark after this attack;
D) The mixture of O₂ + Al or Mg provided in the patent for the pyrotechnic shock tube was not feasible in practice due to the loss of gases in the manufacture and use of the product
E) The mixture of Fe₂O₃ + Al or Mg, provided in the patent for the pyrotechnic shock tube, was not feasible in practice, due to the low sensibility of the pyrotechnic mixture to the ignition stimuli found in the application in electric fuzes or ignitors and high index of continuity failures, which is due to the high temperature of Tammann of the components;
F) Due to the limitations given in items D and E, the only remaining options employ highly toxic substances K₂Cr₂O₇, Sb₂O₃ and Sb₂O₅ and mixtures sensitive to friction and shock;
G) The reaction products formed in the reactions of aluminothermy, Al₂O₃, K₂O, Sb, antimony oxides, Cr₂O₃, obligatorily solid by the limitations of the patent have low thermal conductivity, which makes difficult the ignition of poorly sensitive delay elements;
H) The solid reaction products formed in the aluminothermy reactions, obligatorily solids due to the limitations of the Al₂O₃, K₂O, Sb, antimony oxides, Cr₂O₃, have low thermal conductivity, which makes difficult the ignition of poorly sensitive delay elements ; and
I) The powdered pyrotechnic mixture shows poor adherence to the plastic of the tube.

The non-electric system for disassemble initiation signal control of U.S. Patent 4,757,764 has the following disadvantages:
Aa) The extrusion process of the plastic tube involves the dosage of the previously prepared sensitive pyrotechnic mixture during the formation of the plastic tube, with risks of accidental initiation and spreading to the rest of the mixture;
Bb) The system, by using direct tube-to-tube connections, providing a time delay exclusively over a given tube length, is limited to short delays, up to the range of tens of milliseconds, while applications require delays up to the range of seconds, typically up to 10 s;
Cc) The powdered mixtures, containing no adhesion-promoting additive, exhibit low adherence to the plastic of the tube, requiring to use as tube material a Surlyn® type ionomeric resin or silicone as observed in all examples; and
Dd) Since the aim of the author was to obtain a delay system through a tube with substantially reduced speed by eliminating the delay element from the interior of the capsule, there was no optimization of the thermal performance of the formulations. Thus, mixtures with low speed do not initiate slow delays directly.

More recently, a major technological advance has emerged in Brazilian patent BR0303546-8, which is based on the combination of substances in which a developed high-energy pyrotechnic reaction (Al + Fe₃O₄, for example) generates molten metal spark with high heat transfer by conduction and convection for the medium to be started. However, it requires a third low temperature substance of Tammann [T_{Tammann} = T_{fusion}/2], with temperatures expressed in absolute units, that is, with a scale where the zero point coincides with absolute zero, such as K (Kelvin) or R (Rankine) to provide a sufficiently low activation energy for both the tube ignition and the propagation of the spark under critical conditions, for example in the case of diesel oil entering the tube.

Although it was a great technological advance, the inventor researched new solutions using the industrial expertise currently available, solving the disadvantages, limitations and inconveniences of reducing or even eliminating the use of contaminants from underground water, presenting a great risk to conduct an electrostatic discharge from the human body to its end, and to use pyrotechnic mixture production process quite complex and with risks of accidents due to friction and mechanical shocks.

"THERMAL SPARK CONDUCTOR TUBE WITH USE OF NANOMETRIC PARTICLES", object of the present patent was developed to overcome the disadvantages, drawbacks and limitations of the existing tubes, as it can eliminate the substance with low temperature of Tammann, even though the activation energy remains high, by the use of particles of nanometric diameter, which surprisingly allowed to ignite by the usual means and propagation of the spark through the tube, even under critical conditions of use, thereby allowing the elimination of substances which give the mixture a greater sensitivity to friction and shock, and which are often prohibited by government regulations of several countries, especially perchlorates, which have been eliminated in formulations of explosives in the USA. In addition, perchlorates are salts that readily ionize when exposed to moisture, even moisture remaining in the atmospheric air inside the tube, and for this reason contribute to an inadequate result in the flash-over test EN-13763-12 of the European Union.

Additionally, it uses aluminum particles coated with electrically insulating layers of silica or aluminum oxide, so that such particles do not conduct static electricity through the interior of the tube.

The present invention solved the following problems that the solutions of the technical state-of-art did not solve:
1. The low temperature substances of Tammann which actually functioned commercially for the product of the prior invention were inorganic perchlorates, notably potassium perchlorate, which has been the subject of regulatory bans in a number of countries, such as the USA and European Union, because perchlorates contaminate water sources, which can cause methemoglobinemy and hyperthyroidism by eliminating iodine. The main target has been explosives based on inorganic perchlorates, especially explosive emulsions for use in underground mines, which have sodium, ammonium or potassium perchlorate in their formulations;
2. The very characteristic of low activation energy of low temperature compounds provides a higher sensitivity to the friction and shock in pyrotechnic mixtures containing such substances, increasing the risk of accidents;
3. Sodium and potassium perchlorates are also in the form of crystalline salts of very large particle mean diameter for direct application to the spark-generating mixtures of the prior invention (mean diameter greater than 40 µm), so that a prior micronization (particle size reduction) operation is required in micronizers by mechanical shock of compressed air jets, in multiple costly steps in both price and power consumption, until a mean particle diameter of 1.5 µm or less is obtained; and
4. The negative (inadequate) result in the *flash-over* test, ie the specific test of the European Union which requires that the pyrotechnic mixture when disposed in final form inside the tube does not increase the breaking distance of the dielectric resistance of the atmospheric air of this same interior. Such a requirement is due to the risk that an electrostatic discharge of the level of energy normally accumulated in the human body occurs at the opposite end of a tube which has come into contact with an electrostatically charged individual, which may initiate a fuze connected to this tube. In other words, the pyrotechnic mixture must have a low electrical conductivity. However, both aluminum and ionic potassium perchlorate are good conductors of electricity.

In the present invention, these problems have been solved by using only two non-forbidden components (aluminum and iron oxide or copper oxide in particle diameters of the order of nanometers), and which, due to Tammann temperatures higher than perchlorate, present higher activation energy and make their pyrotechnic mixtures less sensitive to friction and mechanical shocks.

The aluminum of the present invention is in the electrically insulating form because its particles are coated by a hard layer (mechanically resistant) of silica (silicon oxide) or electrically insulating aluminum oxide. Potassium perchlorate has been eliminated or substantially reduced in the present invention because even low moisture of the air is sufficient to make pyrotechnic mixtures containing readily electrically conductive ionizable salts to the extent of being disapproved in the *flash-over* test. The use of the minimum amounts of perchlorate applies mainly in some applications where passage through folds or knots may occur.

The object of the present patent has the advantages of dispensing with the use of low temperature substance of Tammann, therefore the pyrotechnic mixture inside it, is less sensitive to friction and shock, dispenses the use or allows substantial reduction of perchlorate contaminants from underground water, it is approved for the *flash-over* test, ie it has a lower risk of conducting an electrostatic discharge from the human body to its end, and the production process of the pyrotechnic mixture is quite simple by simply mixing the components in an elastic polymer ball mill.

Several tests were carried out to determine the percentage ranges of the components, following the name and detailed description of each of them:

### 1)"Flash-over" test

This test is performed on flash-over equipment according to European Standard EN 13763-24: Explosives for Civil Use - Detonators and Transmitters - Part 24: Determination of the electrical non-conductivity of the shock tube. The test is briefly described below:

Thirty samples of spark conductor tube of 100 mm length are used in the test, which consists of traversing two thin rod-shaped electrodes, one at each end of the sample, perfectly aligned with the center of the tube, applying a voltage of 10 kV in direct current between the electrodes, and approach its tips slowly until the passage of a spark between them occurs. The distance in millimeters in which 5) the greater the more electrically conductive the tube inner medium, the greater the risk of conducting an electrostatic discharge from the human body into the tube inner. The specification limit of the European Standard is a maximum of 20 mm.

### 2) Propagation Speed Test

A length of tube measuring 5 m in length is placed between two optical sensors connected to a precision timer. When the tube is started, the light of the spark, when passing the first sensor, starts counting time, and, when it passes the second sensor, stops this count. The propagation speed is obtained by dividing 5 by the time obtained in seconds.

### 3) Test of Minimum Space of Propagation Between Folds

In 10 samples, the spark of the tube must pass through 10 folds of 180° carried out in the same, at a certain distance between them. The shortest distance between the following: 1 m, 50 cm, 30 cm, 20 cm and 10 cm in which all samples propagate to the tip is recorded as "minimum distance between folds".

### 4) Test of Maximum Traction Effort by Knots

The 80 cm length tube sample with a single knot in half its length, made without tightening, attached at its ends is attached to a traction device with a load cell capable of measuring the tensile stress with accuracy of 100 gf and a digital display of the load cell traction effort. The tube is manually drawn through a lever, and when the desired traction effort is reached, the tube is started at one of its ends by a hand-operated actuator with ear fuze. The passage of the spark by the knot or failure of the spark continuity by the knot is observed by the relative darkening of the tube in the burned session. If the tube fails, a less effort traction will be attempted with a new sample. If the spark passes through the knot, greater effort traction will be attempted on a new sample. The test result will be the highest traction in which 5 successive samples work without fail

### 5) Initiation Test by Low Core Load Detonating Cord (% of failures)

100 samples of 1m of tube are placed on the ignition with detonating cord with load of 2 g PETN/m linear, known in the industry as NP-02, attached to the cord through a J-type connector. The number of failed parts is noted as "percentage of cord initiation failures".

### 6) Impact Sensitivity Test

The test is performed on BAM Fall Hammer equipment originally developed by the BAM Federal Institute for Research and Testing of Materials from Germany in accordance with European Standard EN 13631-4: Explosives for Civil Use - High Explosives - Part 4: Determination of Sensitivity to Impact of Explosives. The test is briefly described below:

A sample of the powdered mixture shall be subjected to the impact of a known free falling weight from a given height.

The energy in which 5 successive samples deflagrate is calculated by the formula E = m.g.h, where m = mass of free falling weight; g = acceleration of local gravity and h = minimum height for ignition.

### 7) Slow Delay Element Sensitivity Test

A delay element of 9 s delay time with a 30 mm column length containing slow delay mixture without additional initiator mixture layer is positioned at the glass PVC hose tip of 6 mm of diameter with variable length, with the end of a spark conductor tube in accordance with the formulations of the present invention, of 1 m in length aligned with the other end of the PVC hose. When the tube is started, the spark must cross the free space inside the hose and start the delay element. The longer the hose length in which the elements start a minimum of 5 successive elements, the better the thermal performance of the spark. The longer hose length at which the elements start without failure is noted as "Slow Delay Element Sensitivity".

### 8) Tube-to-Tube Air Gap Test

A piece of 3 m length spark conductor tube is cut transversely into two 1.5 m halves, and these halves are spaced apart with a given spacing, keeping them aligned within an aluminum guide in the shape of half-round. The largest distance in which the spark, when crossing the open air space between the tube portions, starts the second portion in 5 successive samples, is annotated as "Tube-to-Tube Air Gap".

### 9) Test after Exposure to Hot Explosive Emulsion

Thirty 12 m tube samples, with the ends sealed by a rubber bushing and a fuze capsule according to the industry standard, are immersed in conventional explosive emulsion with marine diesel oil, which causes greater aggressiveness to the plastic, at a temperature of 65 °C for twenty-four hours. The tubes are started and the percentage of failed parts is recorded as "Failures by Exposure to Hot Explosive Emulsion".

### 10) Mixture Adhesion Test to the Tube.

Ten tube samples with a length of 3 m each are weighed in a laboratory scale with an accuracy of 0.0001 g. Thereafter, the inside of the tubes is blown out of compressed air nozzle at a pressure of 0.2 kgf/cm² gauge, and a flow rate of 0.2 Nm³/min. for 2 min, in order to remove the fraction of non-adhered powder to the inner wall of the tube. The tube is weighed again, with accuracy of 0.0001 g. Then the inside of the tubes is washed with a flow of 0.2% aqueous Sodium Hydroxide solution for dissolution of the Aluminum and of the possible Perchlorate and drag of the nanometric Iron Oxide and Talc at a flow rate of 200 ml/min., for a minimum of 3 min. The tube with all the powder removed is again flushed with Acetone at a flow rate of 200 ml/min. for 1 min, and then dried by a dry compressed air flow rate of 0.2 Nm³/min. at a pressure of 0.5 Nm³/min. for a minimum of 3 min. for drying the Acetone. The empty, dry plastic tube is weighed with an accuracy of 0.0001 g. The mass of powder initially present in the tube and the mass of the powder remaining adhered to the tube after initial withdrawal with compressed air are calculated by differences, and then the percentage by mass of loose powder in relation to the total mass of powder initially present in the tube is calculated.

Several tests were carried out to determine the percentage ranges of the components with, for example, the following test which obtained the preferred formulation of the present patent: a ball mill was mixed with polyvinyl rubber balls for 30 minutes of electrically insulating powdered Aluminum coated with Powdal 2900 type silica of Schlenk Metallpulver from Germany, ferric oxide (Fe₂O₃) with a mean particle diameter of 30 nm of Nanophase from England, and talc in the following proportions at weight percent:
- Aluminum Powdal 2900: 45 %; and
- Iron oxide NanoArc FE-300 Nanophase 30 nm: 54 %.
- Talc: 1 %.

It was also tested the nanometric powdered aluminum with particle diameter of 20 to 100 nm electrically insulating coated with aluminum oxide along with iron oxide nanometric and compatible results were obtained.

As in the fold and knot tests the distance limits between folding for full functionality and passage of the spark by knots under tensile stress were below that expected for many practical applications, it was tested the use of formulations with small amounts of potassium perchlorate that allow to improve the limits in the test of folds and knots, obtaining the minimum value of 6% of potassium perchlorate and recommended range of 8 to 12%.

The following results were obtained as described in TABLE 1 shown at final of this report.

With the tests carried out it was concluded that the formulation of the thermal spark conductor tube of the present invention has the following formulation at weight percent:
- Powdered aluminum with a morphology of "flake", minimum purity 99.5%, covered and stabilized by silica or other electrically insulating material, with a mean particle diameter between 5 and 18 µm, as Powdal 2900 from SchlenkMetallpulver or similar: 35 % to 62%;
- Nanometric iron oxide with faceted almost spherical morphology, mean particle diameter between 10 and 100 nm, such as NanoArc FE-300 Nanophase or similar: 32 % a 60 %;
- Potassium Perchlorate ranging from 0 % to 25 %.
- Talc: ranging from 0.8 to 1.5 %

With the tests carried out it was also concluded that the preferred formulation of the thermal spark conductor tube of the present invention is as follows at weight percent:
- Powdered aluminum with a flake type morphology, minimum purity 99.5%, covered and stabilized by silica or other electrically insulating material, with a mean particle diameter of 11 µm, such as Powdal 2900 or similar: 45 %;
- Nanometric iron oxide with faceted almost spherical morphology, mean particle diameter of 30nm, as NanoArc FE-300 Nanophase or similar: 54 %; and
- Talc : 1% for common applications, where it is not important to go through folds and knots; or alternatively:
- Powdered aluminum with a flake type morphology, minimum purity of 99.5%, covered and stabilized by silica or other electrically insulating material with a mean particle diameter between 5 and 18 µm, such as Powdal 2900 or similar: 45 %;
- Nanometric iron oxide with faceted almost spherical morphology, mean particle diameter of 30nm, such as NanoArc FE-300 Nanophase or similar: 44 %
- Potassium Perchlorate: 10 %; and
- Talc: 1 % for applications where it is important to go through folds and knots;

With the tests carried out it was concluded that alternatively the formulation of the thermal spark conductor tube of the present invention may be as follows at weight percent:
- Nanometric powdered aluminum with a flake type morphology, minimum purity of 99.5%, covered and stabilized by silica or other electrically insulating material with a mean particle diameter of 20 to 100 nm: 35 % to 62 % ;
- Nanometric iron oxide with faceted almost spherical morphology, mean particle diameter between 10 and 100 nm: 32 % to 60 %;
- Potassium Perchlorate ranging from 0 % to 25 %; and
- Talc: ranging from 0.8 to 1.5 %.

**TABLE 1 - Results of Practical Tests**

| **FORMULATION** | **FLASH-OVER DISTANCE** | **PROPAGATION SPEED** | **MINIMUM PROPAGATION SPACE BETWEEN FOLDS** | **MAXIMUM TRACTION EFFORT OF PASSAGE BY KNOTS** | **INITIATION BY LOW CORE LOADING DETONATING CORD (% OF FAILURES)** | **SENSITIVITY TO IMPACT** | **SLOW DELAY ELEMENT SENSITIVITY** | **TUBE TO TUBE AIR GAP** | **FAILURES AFTER EXPOSURE TO HOT EXPLOSIVE EMULSION** | **MIXTURE ADHERENCE TO TUBE** |
|---|---|---|---|---|---|---|---|---|---|---|
| AI POWDAL 2900 64.5% | 6mm | 964 m/s | 1 m | 3 f-kg | 8% | 9.2 N | 6 cm | 30 nm | 25% | 5% |
| Fe₃O₄NanometricNanoArcFE300 from Nanophase 34.5% | | | | | | | | | | |
| talc 1.0% | | | | | | | | | | |
| AI POWDAL 2900 45% | 7 mm | 1091 m/s | 1 m | 3 f-kg | zero | 9.2 N | 7 cm | 30 nm | zero | 5% |
| Fe₃O₄NanometricNanoArcFE300 from Nanophase 54% | | | | | | | | | | |
| talc 1.0% | | | | | | | | | | |
| AI 62% | 11 mm | 1083 m/s | 1 m | 4 f-kg | zero | 9.2 N | 6 cm | 80 nm | zero | 3.8% |
| Fe₃O₄NanometricNanoArcFE300fromN anophase 32% KCIO₄ 5 % | | | | | | | | | | |
| talc 1.0% | | | | | | | | | | |
| AI 45% | 15 mm | 1142 m/s | 40 cm | 9 f-kg | zero | 9.2 N | 12 cm | 100 nm | zero | 6% |
| Fe₃O₄NanometricNanoArcFE300fromN anophase 44% | | | | | | | | | | |
| KCIO₄ 10% | | | | | | | | | | |
| talc 1.0% | | | | | | | | | | |
| AI 35% | 22 mm | 1260 m/s | 30 cm | 2 f-kg | zero | 9.2 N | 5 cm | 15 nm | 15 % | 3.2% |
| Fe₃O₄NanometricNanoArcFE300fromN | | | | | | | | | | |
| anophase 39% | | | | | | | | | | |
| KCIO₄ 25% | | | | | | | | | | |
| talc 1.0% | | | | | | | | | | |
| Standard HMX/Al mixture of conventional shock tube with single layer of plastic | 6mm | 2000 m/s | 1 m | 2 f-kg | zero | 3.8 N | FAILS TO IGNITE, EVEN AT ZERO DISTANCE | 10 mm | NOT PERFORMED | NOT PERFORMED |
| Standard HMX/Al mixture of conventional shock tube with double layer of plastic | 6 mm | 2000 m/s | 50 cm | 8 f-kg | zero | 3.8 N | FAILS TO IGNITE, EVEN AT ZERO DISTANCE | 10 mm | NOT PERFORMED | NOT PERFORMED |

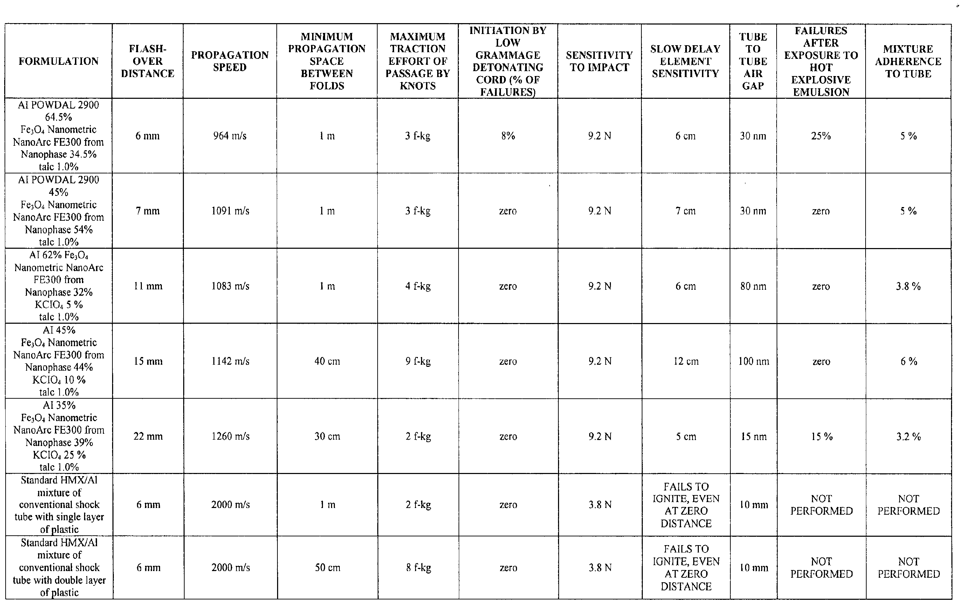

## Claims

1. **"THERMAL SPARK CONDUCTOR TUBE USING NANOMETRIC PARTICLES",** in the form of a flexible plastic tube, with internal diameter between 1.0 and 1.5 mm, and outer diameter between 2.8 and 3.4 mm, substantially hollow, containing a thin powder pyrotechnic mixture deposited on its inner wall, **characterized in that** the pyrotechnic mixture has the following formulation at weight percentage:
- Aluminum powder with "flake" type morphology, minimum purity 99.5%, covered and stabilized by silica or other electrically insulating material, with a mean particle diameter between 5 and 18 µm: 35% to 62%;
- Nanometric iron oxide with faceted almost spherical morphology, average particle diameter between 10 and 100 nm: 32% to 60%;
- Potassium Perchlorate ranging from 0% to 25%; and
- Talc: Ranging from 0.8 to 1.5%

2. **"THERMAL SPARK CONDUCTOR TUBE WITH USE OF NANOMETRIC PARTICLES",** for common applications where the passage through kinks and knots is not important, in the shape of a flexible plastic tube, with internal diameter between 1.0 and 1.5 mm, and outer diameter between 2.8 to 3.4 mm, substantially hollow, containing a fine powder pyrotechnic mixture deposited on its inner wall, according to claim 1, **characterized in that** the pyrotechnic mixture has the following preferential formulation at weight percentage:
- Aluminum powder with "flake" type morphology, minimum purity 99.5%, covered and stabilized by silica or other electrically insulating material, with a mean particle diameter of 11 µm: 45%;
- Nanometric iron oxide with faceted almost spherical morphology, with a particle diameter of 30 nm: 54%; and
- Talc : 1 %

3. **"THERMAL SPARK CONDUCTOR TUBE WITH USE OF NANOMETRIC PARTICLES"**, for applications where the passage through folds and knots is important, in the shape of a flexible plastic tube, with internal diameter between 1.0 and 1.5 mm, and outer diameter between 2.8 and 3.4 mm, substantially hollow, containing deposited on its inner wall a fine powder pyrotechnic mixture according to claim 1, **characterized in that** the pyrotechnic mixture has the following preferential formulation at weight percentage:
- Aluminum powder with "flake" type morphology, minimum purity 99.5%, covered and stabilized by silica or other electrically insulating material, with a mean particle diameter of 11 µm: 45%;
- Nanometric iron oxide with faceted almost spherical morphology with a particle diameter of 30 nm: 44 %
- Potassium Perchlorate:10 %; and
- Talc: 1 %

4. **"THERMAL SPARK CONDUCTOR TUBE WITH USE OF NANOMETRIC PARTICLES",** in the shape of a flexible plastic tube, having an internal diameter between 1.0 and 1.5 mm, and an outer diameter between 2.8 and 3.4 mm, substantially hollow, containing a thin powder pyrotechnic mixture deposited on its inner wall, **characterized in that** alternatively the pyrotechnic mixture has the following formulation at weight percentage:
- Nanometric aluminum powder with a "flake" type morphology, minimum purity 99.5%, covered and stabilized by silica or other electrically insulating material, with a mean particle diameter of 20 to 100 nm: 35% to 62%;
- Nanometric iron oxide with faceted almost spherical morphology, mean particle diameter between 10 and 100 nm: 32% to 60 %;
- Potassium Perchlorate ranging from 0 % to 25 %; and
- Talc: Ranging from 0.8 to 1.5 %
